# EUROPÄISCHE PATENTSCHRIFT

(11) **EP 2 821 213 B1**
(45) Veröffentlichungstag und Bekanntmachung des Hinweises auf die Patenterteilung: **30.08.2017**
(21) Anmeldenummer: 14168390.4
(22) Anmeldetag: 15.05.2014
(51) Int. Cl.: B29D 30/06, B60C 11/13

(54) **Reifenheizform**
Heating mould for tyres
Moule de chauffage de pneumatique

(30) Priorität: 01.07.2013 DE 102013106886
(43) Veröffentlichungstag der Anmeldung: 07.01.2015
(73) Patentinhaber: Continental Reifen Deutschland GmbH, 30165 Hannover (DE)
(72) Erfinder: Weber, Christian, 30826 Garbsen (DE); Torbrügge, Thorsten, 30855 Langenhagen (DE); Noga, Mareile, 30171 Hannover (DE); Seng, Matthias, 30449 Hannover (DE)
(74) Vertreter: Finger, Karsten

(56) Entgegenhaltungen:
- DE-A1-102008 034 004
- JP-A- S5 998 834
- JP-A- 2002 316 328

## Beschreibung

Die Erfindung betrifft eine Reifenheizform mit einem Segmentring, welcher aus mindestens sechs Formsegmenten zusammengesetzt ist, welche in ihrer Mitte zum Öffnen und Schließen in radialer Richtung bewegbar sind und Formstege aufweisen, die im Laufstreifen eines Fahrzeugluftreifens Querrillen ausformen und mit Flankenflächen versehen sind, die in Richtung der Auszugsrichtung des Formsegmentes geneigt sind, wobei nahe von Formsegmentgrenzen Querrillen ausbildende Formstege angeordnet sind, deren von der Formsegmentgrenze weiter entfernt befindlichen Flankenflächen unter einem Winkel zur radialen Richtung geneigt sind, welcher zumindest um 5° größer ist als der Winkel, unter dem die näher zur Formsegmentgrenze befindlichen Flankenflächen zur radialen Richtung verlaufen.

Eine Reifenheizform der eingangs genannten Art ist aus der DE 10 2008 034 004 A1 bekannt. Diese Reifenheizform weist Formsegmente mit im Laufstreifen eines Fahrzeugluftreifens Querrillen ausformenden Formstegen auf. Nahe Formsegmentgrenzen angeordnete Formstege sind durch Flankenflächen begrenzt, von welchen die von der jeweiligen Formsegmentgrenze weiter entfernt befindlichen Flankenflächen unter einem Winkel zur radialen Richtung geneigt sind, welcher größer ist als der Winkel, unter dem die näher Formsegmentgrenzen befindlichen Flankenflächen zur radialen Richtung verlaufen.

Eine weitere Reifenheizform ist aus der DE 41 14 279 C2 bekannt. Ein Reifen mit einem Laufstreifen mit in Umfangs- und Querrichtung zickzackförmig verlaufenden Rillen wird in einer radial geteilten Heizform vulkanisiert, deren die Rillen formenden Stege derart ausgeführt sind, dass die Nutflanken bildenden Flächen Rillentäler und Rillenberge aufweisen, deren Erstreckung parallel zur Bewegungsrichtung des jeweiligen Formsegmentes ist. Damit soll der kleinstmögliche Widerstand beim Entformen der geheizten Reifen aus der Vulkanisationsform erzielt werden und eine Erhöhung der Rissgefährdung vermieden werden. Es ist bekannt, dass das Entformen von herkömmlich ausgeführten Formstegen, die von der Formsegmentmitte weiter entfernt sind, höhere Kräfte erfordert als das Entformen von Formstegen im mittleren Bereich des jeweiligen Formsegmentes, da hier die Orientierung der Formstege mit der Auszugsrichtung besser übereinstimmt. Beim Entformen werden daher die Profilpositive, beispielsweise Profilblöcke, die nahe von Formsegmentgrenzen geformt werden, stärker deformiert, es muss ein Verkanten zwischen Formstegen und Profilpositiven überwunden werden. Dieses Verkanten hat zur Folge, dass im Bereich des Rillengrundes der Querrillen hohe Kräfte wirken, sodass hier Einrisse entstehen können.

Der Erfindung liegt die Aufgabe zu Grunde, die aus dem Stand der Technik bekannten grundsätzlichen Ideen weiter zu entwickeln und zu optimieren, insbesondere soll darauf geachtet werden, dass die Eigenschaften des Reifens bzw. des Laufstreifens, die der ursprünglichen Auslegung zu Grunde gelegt wurden, erhalten bleiben.

Gelöst wird die gestellte Aufgabe erfindungsgemäß dadurch, dass ein nahe der Formsegmentgrenze angeordneter Formsteg ein solcher ist, welcher in einem Bereich von bis zu 25 %, insbesondere bis zu 15 %, der Umfangslänge des Formsegmentes, ermittelt ab der Formsegmentgrenze, positioniert ist, wobei die von der Formsegmentgrenze weiter entfernt befindlichen Flankenflächen von nahe der Formsegmentgrenze angeordneten Formstegen zumindest über die Hälfte ihrer radialen Erstreckung in die Auszugsrichtung des Formsegmentes weisen.

Gemäß der Erfindung werden daher Flankenflächen an Formstegen, die sich in der Nähe der Formsegmentgrenzen befinden und für ein leichtes Entformen maßgeblich sind, derart gegenüber der radialen Richtung geneigt, dass die Gefahr eines Verkantens verringert wird. Diese Maßnahme wird bevorzugt zumindest an jenen Formstegen getroffen, die besonders kritisch hinsichtlich eines Verkantens sind. Es wird daher gemäß der Erfindung vor allem an jenen Bereichen der Reifenheizform die Entformung erleichtert, wo die größte Gefahr des Entstehens von Einrissen am Rillengrund von Querrillen besteht. Dies hat den Vorteil, dass der Positivanteil des Laufstreifens weitgehend erhalten bleibt - zu viele gegenüber der radialen Richtung unter relativ großen Winkeln geneigte Rillenflanken würden ja den Positivanteil reduzieren - und dass daher vor allem die Nassbremseigenschaften des Reifens auf hohem Niveau erhalten bleiben können.

Bei bestimmten Ausführungen von Laufstreifenprofilen, beispielsweise bei sogenannten laufrichtungsgebunden ausgeführten Laufstreifenprofilen, kann es vorteilhaft sein, wenn lediglich nahe der einen Formsegmentgrenze eines Formsegmentes Formstege gemäß der Erfindung ausgebildet werden.

Gemäß einer bevorzugten Ausführungsform der Erfindung beträgt der Winkel, unter welchem die von der Formsegmentsgrenze weiter entfernt befindlichen Flankenflächen zumindest abschnittsweise zur radialen Richtung verlaufen zumindest 10°. Formstege mit Flankenflächen einer derartigen Neigung lassen sich besonders leicht aus dem fertig vulkanisierten Reifen beim Öffnen der Reifenheizform entfernen.

Die betreffenden Flankenflächen können nun über ihre gesamte Erstreckung zwischen dem Rillengrund bzw. der Rillengrundrundung und der Formsegmentinnenfläche erfindungsgemäß geneigt verlaufen. Bei einer alternativen Ausführungsform ist es möglich, dass lediglich der an den den Rillengrund formenden Bereich der Formstege anschließende Abschnitt erfindungsgemäß geneigt verläuft. Dieser Abschnitt sollte mindestens 50% der radialen Erstreckung der betreffenden Flankenfläche einnehmen. Beim Entformen löst sich das Gummimaterial vom inneren Bereich des Formsteges relativ leicht, wodurch insgesamt das Loslösen des Gummimaterials vom Formsteg erleichtert wird.

Erfindungsgemäß ausgeführte Formstege werden ferner bevorzugt in bestimmten Formsegmentbereichen, die daher bestimmte Laufstreifenprofilbereiche ausformen vorgesehen. So sind insbesondere im mittleren Bereich des Laufstreifens eines vulkanisierten Fahrzeugluftreifens die Auszugskräfte höher als in bzw. nahe den Schulterbereichen. Bei einer bevorzugten Ausführungsform der Erfindung formen daher die Formstege Querrillen im mittleren, bis zu 75 %, insbesondere bis zu 60%, vorzugsweise bis zu 40 %, der Laufstreifenbreite einnehmenden Bereich des Laufstreifens.

Auch Profilpositive, die einen Carboncenterbeam beinhalten, fordern beim Entformen höhere Auszugskräfte, da Carboncenterbeams die Profilpositive versteifen. Bei einer weiteren bevorzugten Ausführungsform der Erfindung formen daher die Formstege in Profilpositiven des Laufstreifens Querrillen aus, die einen Carboncenterbeam beinhalten.

Die Erfindung betrifft ferner einen Fahrzeugluftreifen, welcher in einer Reifenheizform, die erfindungsgemäß ausgeführt ist, vulkanisiert worden ist. Im fertig vulkanisierten Fahrzeugluftreifen lässt sich leicht feststellen, ob dieser in einer erfindungsgemäßen Reifenheizform vulkanisiert worden ist, da die Neigung der Querrillenflanken, die nahe vom Formsegmentgrenzen geformt worden sind, von jener der Querrillenflanken der ansonsten ausgebildeten Querrillen abweicht.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 einen Querschnitt durch einen Teilbereich einer Reifenheizform,
Fig. 2 einen Längsschnitt durch ein Formsegment und durch Abschnitte von anschließenden Formsegmenten,
Fig. 3 einen Längsschnitt durch Abschnitte zweier Formsegmente mitsamt einem Längsschnitt durch einen Laufstreifenabschnitt eines Fahrzeugluftreifens mit einer Ausführungsform der Erfindung,
Fig. 4 eine Darstellung analog Fig. 3 mit einer weiteren Ausführungsvariante der Erfindung und
Fig. 5 eine Schrägansicht einiger Profilblöcke eines Laufstreifens eines Fahrzeugluftreifens.

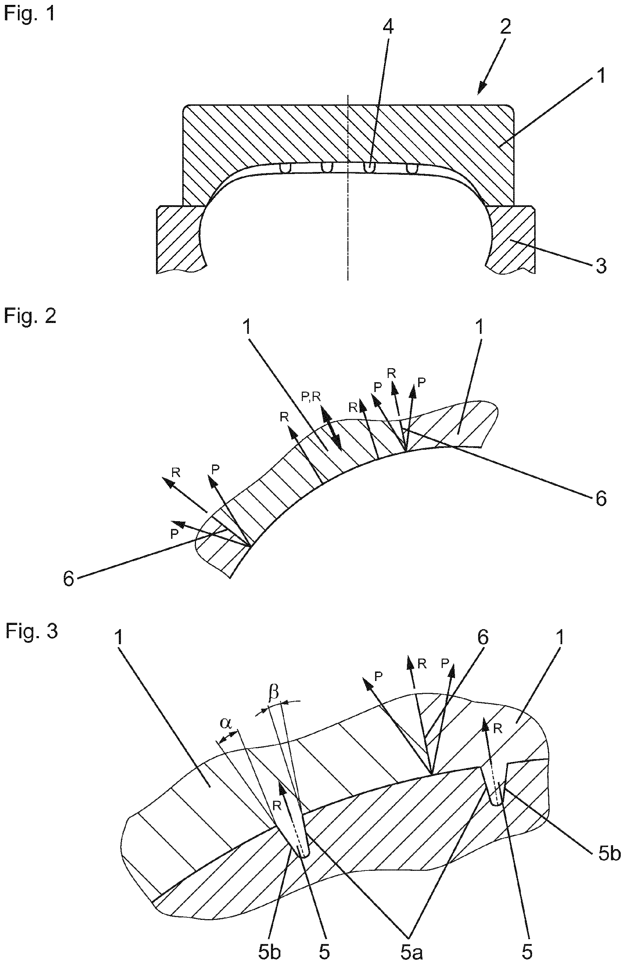

Fig. 1 zeigt von den Bestandteilen einer Reifenheizform, welche zur Profilgebung und Vulkanisation von Fahrzeugluftreifen, beispielsweise Reifen für Personenkraftwagen, vorgesehen ist, einen aus Formsegmenten 1 zusammengesetzten Segmentring 2 und Abschnitte von Seitenwandschalen 3. Die beiden Seitenwandschalen 3 sind in axialer Richtung und von außen betrachtet im Wesentlichen kreisringförmig, ihre Innenflächen bilden bzw. formen die äußeren, ebenfalls kreisringförmig verlaufenden

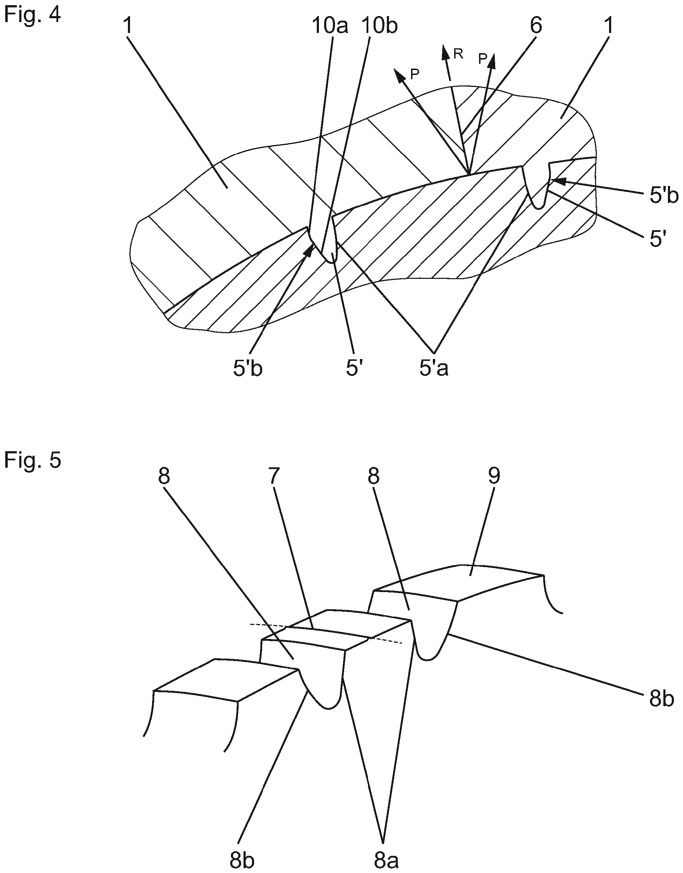

Seitenwandflächen eines Fahrzeugluftreifens. Der Segmentring 2 setzt sich aus insbesondere sechs bis vierzehn Formsegmenten 1 zusammen und formt den profilierten Laufstreifen des Fahrzeugluftreifens. Zu diesem Zweck sind an den Innenflächen der Formsegmente 1, wie es beispielsweise Fig. 1 und Fig. 3 zeigen, Formstege 4 und 5 vorhanden, wobei beim gezeigten Ausführungsbeispiel die Formstege 4 im Laufstreifen Umfangsrillen und die Formstege 5 im Laufstreifen Querrillen ausformen. Etwaige zusätzlich in Formsegmenten 1 verankerte Lamellenbleche, welche schmale Einschnitte im Laufstreifen des Fahrzeugluftreifens formen, sind nicht dargestellt. Die Formsegmente 1 kontaktieren einander bei geschlossener Reifenheizform an den Formsegmentgrenzen 6 mit ihren stirnseitigen Flächen. Diese Flächen sind üblicherweise ebene Flächen, die in axialer Richtung und in radialer Richtung orientiert sind. Wie in Fig. 5 angedeutet ist, sind die Formsegmentgrenzen 6 am fertigen Reifen am Laufstreifen als kleine, in axialer Richtung verlaufende schmale Erhebungen 7 zu erkennen.

Wie Fig. 2 anhand einer Schnittdarstellung (in Umfangsrichtung) durch ein Formsegment 1 und Abschnitte anschließender Formsegmente 1 zeigt, werden die Formsegmente 1 zum Öffnen und Schließen der Reifenheizform in die durch die Pfeile P gekennzeichneten Richtungen bewegt. Die Auszugsrichtung ist dabei derart, dass die Formsegmentmitte in der jeweiligen Formsegmentmitte radial bewegt wird. Je größer die Entfernung von der Formsegmentmitte wird, umso mehr weicht die Auszugsrichtung von der radialen Richtung ab, sodass bei den Formsegmentgrenzen 6 die Auszugsrichtung merkbar nicht mehr der radialen Richtung, welche durch Pfeile R versinnbildlicht ist, entspricht. Üblicherweise werden die Formstege 5 und damit die von diesen gebildeten Querrillen derart ausgerichtet, dass ihre Flankenflächen bzw. Rillenflanken im Wesentlichen in radialer Richtung orientiert sind und bezüglich der radialen Richtung symmetrisch verlaufen. Unter "im Wesentlichen in radialer Richtung" wird eine Neigung der Flankenflächen bzw. Rillenflanken zur radialen Richtung R zwischen 0° und 7° verstanden, wobei bei Winkeln > 0° die Breite der Formstege 5 an der Formsegmentinnenfläche am größten ist. Bei den im Bereich oder nahe der Formsegmentmitte angeordneten Formstegen 5 entspricht die Auszugsrichtung beim Entformen im Wesentlichen oder weitgehend der Orientierungsrichtung der Flankenflächen. Bei oder nahe der Formsegmentgrenzen müssen die gebildeten Profilpositive, beispielsweise Profilblöcke, stärker deformiert werden, um die Verkantung zwischen der von der Formsegmentgrenze weiter entfernt liegenden Rillenflanke der jeweiligen Querrille und dem Formsteg 5 zu überwinden, sodass hier höhere Auszugskräfte auf die Profilpositive wirken.

Fig. 5 zeigt beispielhaft Profilblöcke 9, die in Umfangsrichtung durch Querrillen 8 getrennt sind. Querrillen verlaufen meist gerade oder leicht bogenförmig gekrümmt unter einem Winkel von bis zu 45° zur axialen Richtung, entweder zwischen Profilblöcken 9 oder in ein Profilband oder dergleichen von einer Umfangsrille aus hinein. Die Querrillen 8 weisen üblicherweise Rillenflanken auf, die im Wesentlichen in radialer Richtung verlaufen und daher mit der radialen Richtung einen Winkel zwischen 0° und 7° einschließen, wobei bei Winkeln > 0° die Breite der Querrillen in Richtung Profilaußenfläche größer wird.

Die höheren Auszugskräfte sind ferner in den im Bereich der Laufstreifenmitte befindlichen Profilpositiven sowie in Profilpositiven, die einen sogenannten Carboncenterbeam (CCB) beinhalten, kritisch. Carboncenterbeams sind lokal im Laufstreifen, insbesondere über den gesamten Umfang, eingebaute Gummimischungsstreifen aus einer elektrisch leitfähigen Gummimischung, die dann im Laufstreifen vorgesehen werden, wenn dieser ansonsten aus einer elektrisch nicht oder nur sehr gering leitfähigen Gummimischung hergestellt wird, beispielsweise einer Mischung die einen relativ hohen Anteil an SiO₂ (Silica) enthält.

Fig. 3 und Fig. 4 zeigen zwei Ausführungsvarianten der Erfindung. Die nahe einer Formsegmentgrenze 6 bzw. einer Formsegmentgrenze 6 benachbart angeordneten Formstege 5, 5' weisen eine der Formsegmentgrenze 6 näher liegende und eine von der Formsegmentgrenze 6 weiter entfernt befindliche Flankenfläche 5a, 5b bzw. 5'a, 5'b auf. Die der Formsegmentgrenze 6 näher befindliche Flankenfläche 5a, 5'a ist in üblicher Weise ausgeführt, sie verläuft bei den gezeigten Ausführungsformen im Wesentlichen in radialer Richtung R bzw. unter einem nur wenige Grad betragenden Winkel β zur radialen Richtung R. Bei der in Fig. 3 gezeigten Variante ist bei den beiden dargestellten Formstegen 5 jeweils die von der Formsegmentgrenze 6 weiter entfernte Flankenfläche 5b unter einem Winkel α zur radialen Richtung R und in Richtung Auszugsrichtung P geneigt, welcher um mindestens 5°, vorzugsweise um mindestens 10°, größer ist als der Winkel β. Im Idealfall weist die Fankenfläche 5b in die Auszugsrichtung.

Wie Fig. 5 zeigt mit solchen Formstegen 5 gebildete Querrillen 8, welche jeweils mit je einer Rillenflanke 8a versehen, die stärker zur radialen Richtung geneigt ist als die zweite Rillenflanke 8b.

Fig. 4 zeigt eine Ausführungsform, bei der die Flankenfläche 5'b in ihrer radialen Erstreckung zwei Abschnitte 10a, 10b aufweist, wobei der eine Abschnitt 10b an den Rillengrund anschließt, über mindestens 50 % der radialen Erstreckung der Flankenfläche 5'b verläuft und analog zur Flankenfläche 5b in bzw. zur Auszugsrichtung geneigt verläuft. Der Abschnitt 10a schließt insbesondere über eine Rundung an den Abschnitt 10b an und ist um mindestens 5°, vorzugsweise um mindestens 10°, geringer zur radialen Richtung geneigt als der Abschnitt 10b.

Erfindungsgemäß gestaltete Formstege 5, 5' werden von den Formsegmentgrenze 6 aus in einem Bereich von bis zu 25 %, vorzugsweise bis zu 15% der Umfangslänge des betreffenden Formsegmentes 1 vorgesehen. Die Umfangslänge wird an der Innenfläche der Formsegmente 1 ermittelt. Außerhalb dieses Bereiches sind herkömmlich ausgeführte Formstege 5, deren Flankenflächen unter Winkeln von bis zu 7° zur radialen Richtung verlaufen, angeordnet. Es können zwei oder mehr einer Formsegmentgrenze benachbarte Formstege 5, 5 gemäß der Erfindung ausgeführt sein, wobei es möglich ist, die Formstege lediglich nahe der einen Formsegmentgrenze eines Formsegmentes gemäß der Erfindung auszubilden.

Querrillen in der Laufstreifenmitte, in einem Bereich von 75 %, bevorzugt 60 %, besonders bevorzugt 40 % der Laufstreifenbreite (Breite des bodenberührenden Teils des Laufstreifens) sowie Querrillen in Profilpositiven, die einen CCB beinhalten, werden vorteilhafterweise nahe der Formsegmentgrenzen sämtlich von Formstegen 5, 5' gebildet, die erfindungsgemäß ausgeführt sind. Die Neigung der Flankenflächen 5b, 5'b kann derart variiert werden, dass je weiter die Formstege 5 von der Formsegmentmitte entfernt sind, umso größer der Winkel α gewählt wird.

### Bezugsziffern

- 1: Formsegment
- 2: Segmentring
- 3: Seitenwandschale
- 4: Formsteg
- 5, 5': Formsteg
- 5a, 5b, 5'a, 5'b: Flankenfläche
- 6: Formsegmentgrenze
- 7: Erhebung
- 8: Querrille
- 8a, 8b: Rillenflanke
- 9: Profilblock
- 10a, 10b: Abschnitt
- P: Auszugsrichtung
- R: radiale Richtung
- α: Winkel
- β: Winkel

## Patentansprüche

1. Reifenheizform mit einem Segmentring (2), welcher aus mindestens sechs Formsegmenten (1) zusammengesetzt ist, welche in ihrer Mitte zum Öffnen und Schließen in radialer Richtung bewegbar sind und Formstege (5, 5') aufweisen, die im Laufstreifen eines Fahrzeugluftreifens Querrillen (8) ausformen und mit Flankenflächen (5b, 5'b) versehen sind, die in Richtung der Auszugsrichtung des Formsegmentes (1) geneigt sind, wobei nahe von Formsegmentgrenzen (6) Querrillen (8) ausbildende Formstege (5, 5') angeordnet sind, deren von der Formsegmentgrenze (6) weiter entfernt befindlichen Flankenflächen (5b, 5'b) unter einem Winkel (α) zur radialen Richtung (R) geneigt sind, welcher zumindest um 5° größer ist als der Winkel (β), unter dem die näher zur Formsegmentgrenze (6) befindlichen Flankenflächen (5a, 5'a) zur radialen Richtung (R) verlaufen,
**dadurch gekennzeichnet,**
**dass** ein nahe der Formsegmentgrenze (6) angeordneter Formsteg (5, 5') ein solcher ist, welcher in einem Bereich von bis zu 25 %, insbesondere bis zu 15 %, der Umfarigslänge des Formsegmentes (1), ermittelt ab der Formsegmentgrenze (6), positioniert ist, wobei die von der Formsegmentgrenze (6) weiter entfernt befindlichen Flankenflächen (5b, 5'b) von nahe der Formsegmentgrenze (6) angeordneten Formstegen (5, 5) zumindest über die Hälfte ihrer radialen Erstreckung in die Auszugsrichtung (P) des Formsegmentes (1) weisen.

2. Reifenheizform nach Anspruch 1, **dadurch gekennzeichnet, dass** der Winkel (α), unter welchem die von der Formsegmentgrenze (6) weiter entfernt befindlichen Flankenflächen (5b, 5'b) zumindest abschnittsweise zur radialen Richtung (R) verlaufen, zumindest 10° beträgt.

3. Reifenheizform nach einem der Ansprüche 1 bis 2, **dadurch gekennzeichnet, dass** der an den den Rillengrund formenden Bereich der Formstege (5') anschließende Abschnitt (10b) unter dem Winkel (α) geneigt verläuft.

4. Reifenheizform nach einem der Ansprüche 1-3, **dadurch gekennzeichnet, dass** die nahe von Formsegmentgrenzen (6) angeordneten Formstege (5, 5') Querrillen (8) im mittleren, bis zu 75 %, insbesondere bis zu 60%, vorzugsweise bis zu 40 %, der Laufstreifenbreite einnehmenden Bereich des Laufstreifens formen.

5. Fahrzeugluftreifen, welcher in einer Reifenheizform gemäß zumindest einem der Ansprüche 1 bis 4 vulkanisiert worden ist.

## Claims

1. Tyre heating mould comprising a segmented ring (2), which is made up of at least six mould segments (1), which are movable in their middle for opening and closing in a radial direction and have mould ridges (5, 5'), which mould transverse grooves (8) in the tread of a pneumatic vehicle tyre and are provided with flank faces (5b, 5'b), which are inclined in the direction of the withdrawing direction of the mould segment (1), wherein mould ridges (5, 5') that form transverse grooves (8) are arranged near mould segment boundaries (6) and their flank faces (5b, 5'b) that are located further away from the mould segment boundary (6) are inclined at an angle (α) to the radial direction (R) that is at least 5° greater than the angle (β) at which the flank faces (5a, 5'a) that are located closer to the mould segment boundary (6) run in relation to the radial direction (R), **characterized**
**in that** a mould ridge (5, 5') arranged near the mould segment boundary (6) is such a ridge that is positioned in a range of up to 25%, in particular up to 15%, of the circumferential length of the mould segment (1), determined from the mould segment boundary (6), wherein the flank faces (5b, 5'b) that are located further away from the mould segment boundary (6) of mould ridges (5, 5) arranged near the mould segment boundary (6) point in the withdrawing direction (P) of the mould segment (1) at least over half of their radial extent.

2. Tyre heating mould according to Claim 1, **characterized in that** the angle (α) at which the flank faces (5b, 5'b) that are located further away from the mould segment boundary (6) run at least in some portions in relation to the radial direction (R) is at least 10°.

3. Tyre heating mould according to either of Claims 1 and 2, **characterized in that** the portion (lOb) adjoining the region of the mould ridges (5') that forms the groove base runs inclined at the angle (α).

4. Tyre heating mould according to one of Claims 1-3, **characterized in that** the mould ridges (5, 5') arranged near mould segment boundaries (6) form transverse grooves (8) in the middle region of the tread that takes up up to 75%, in particular up to 60%, preferably up to 40%, of the width of the tread.

5. Pneumatic vehicle tyre that has been vulcanized in a tyre heating mould according to at least one of Claims 1 to 4.

## Revendications

1. Moule de chauffage de pneumatique avec un anneau segmenté (2), qui est composé d'au moins six segments de moule (1), qui sont mobiles en direction radiale dans leur milieu pour l'ouverture et la fermeture et qui présentent des nervures de moulage (5, 5'), qui forment des rainures transversales (8) dans la bande de roulement d'un pneumatique de véhicule et qui sont munies de faces de flanc (5b, 5'b), qui sont inclinées dans la direction de la direction d'extraction du segment de moule (1), dans lequel des nervures de moulage (5, 5') formant des rainures transversales (8) sont disposées à proximité de limites de segment de moule (6), dont les faces de flanc (5b, 5'b) se trouvant plus loin de la limite de segment de moule (6) sont inclinées d'un angle (α) par rapport à la direction radiale (R), qui est plus grand d'au moins 5° que l'angle (β) avec lequel les faces de flanc (5a, 5'a) se trouvant plus près de la limite de segment de moule (6) s'étendent par rapport à la direction radiale (R), **caractérisé en ce qu'**une nervure de moulage (5, 5') disposée à proximité de la limite de segment de moule (6) est une nervure qui est positionnée dans une plage couvrant jusque 25 %, en particulier jusque 15 % de la longueur périphérique du segment de moule (1), déterminée à partir de la limite de segment de moule (6), dans lequel les faces de flanc (5b, 5'b) se trouvant plus loin de la limite de segment de moule (6) que des nervures de moulage (5, 5) disposées à proximité de la limite de segment de moule (6) sont orientées au moins sur la moitié de leur extension radiale dans la direction d'extraction (P) du segment de moule (1).

2. Moule de chauffage de pneumatique selon la revendication 1, **caractérisé en ce que** l'angle (α), avec lequel les faces de flanc (5b, 5'b) se trouvant plus loin de la limite de segment de moule (6) s'étendent au moins localement par rapport à la direction radiale (R) vaut au moins 10°.

3. Moule de chauffage de pneumatique selon une des revendications 1 à 2, **caractérisé en ce que** la partie (10b) se raccordant à la région des nervures de moulage (5') formant le fond de rainure est inclinée de l'angle (α).

4. Moule de chauffage de pneumatique selon l'une quelconque des revendications 1 à 3, **caractérisé en ce que** les nervures de moulage (5, 5') disposées à proximité de limites de segment de moule (6) forment des rainures transversales (8) dans la région moyenne de la bande de roulement, qui occupe jusqu'à 75 %, en particulier jusqu'à 60 %, de préférence jusqu'à 40 % de la largeur de la bande de roulement.

5. Pneumatique de véhicule, qui a été vulcanisé dans un moule de chauffage de pneumatique selon au moins une des revendications 1 à 4.
